# EUROPEAN PATENT SPECIFICATION

(11) **EP 3 088 057 B1**
(45) Date of publication and mention of the grant of the patent: **23.10.2019**
(21) Application number: 14874992.2
(22) Date of filing: 27.11.2014
(51) Int. Cl.: A63B 69/00, A63B 69/38, G06T 7/20, H04N 5/225, H04N 5/91, G06T 7/277

(54) **IMAGE PROCESSING DEVICE AND IMAGE PROCESSING METHOD**
BILDVERARBEITUNGSVORRICHTUNG UND BILDVERARBEITUNGSVERFAHREN
DISPOSITIF DE TRAITEMENT D'IMAGES ET PROCÉDÉ DE TRAITEMENT D'IMAGES

(30) Priority: 24.12.2013 JP 2013265631
(43) Date of publication of application: 02.11.2016
(73) Proprietor: Sony Corporation, Tokyo 108-0075 (JP)
(72) Inventor: AOKI, Suguru, Tokyo 108-0075 (JP); KIMURA, Takaomi, Tokyo 108-0075 (JP)
(74) Representative: D Young & Co LLP
(86) International application number: PCT/JP2014/081389
(87) International publication number: WO 2015/098420

(56) References cited:
- WO-A2-2012/174396
- JP-A- H06 311 474
- JP-A- 2004 301 567
- JP-A- 2005 286 394
- JP-A- 2006 181 344
- JP-A- 2014 183 897
- US-A- 5 768 151
- C. O. CONAIRE ET AL.: 'COMBINING INERTIAL AND VISUAL SENSING FOR HUMAN ACTION RECOGNITION IN TENNIS' ANALYSIS AND RETRIEVAL OFTRACKED EVENTS AND MOTION IN IMAGERY STREAMS 25 November 2010, pages 51 - 56, XP058269973 DOI: 10.1145/1877868.1877882

## Description

### Technical Field

The present disclosure relates to an image processing apparatus according to claim 1 and an image processing method according to claim 12.

### Background Art

Technology has been disclosed that aims to more accurately detect a prescribed target object included in an image (for example, refer to Patent Literature 1 or the like). Patent Literature 1 discloses technology that aims to be able to adaptively and efficiently continue tracking, even if the motion characteristics of a tracking target change.

### Citation List

### Patent Literature

Patent Literature 1: JP 2007-328746A

Other background art is WO 2012/174369 A1 and Conaire, C. O. et al, "Combining Inertial and Visual Sensing for Human Action Recognition in Tennis", Proceedings of the 1st ACM Workshop on Analysis and Retrieval of Tracked Events and Motion in Imagery Streams, pp. 51-56, 2010.

### Summary of Invention

### Technical Problem

At the time when analyzing an image, for example, an object of an analysis target is determined, and what position this object is present at in each frame of the image is analyzed. However, in the case where the object of an analysis target is an object with an intense movement such as a ball in a ball game, for example, the processing load will increase when the entire image of each frame is set to an analysis target, and a reduction of the processing performance will be considered due to error detection of the object. Therefore, detecting a prescribed target object included in an image, more efficiently and more accuracy, has been sought after.

Accordingly, the present disclosure proposes a new and improved image processing apparatus and image processing method, capable of a reduction of an image processing load and an increase of an image processing performance by using sensing data acquired at a timing the same as that of image data.

### Solution to Problem

According to the present disclosure, there is provided an image processing apparatus, including: an acquisition unit configured to acquire image data in which a condition is captured where a sensor apparatus that outputs sensing data by sensing a state of a tool used at the time when handling a moving body is used; and an image processing unit configured to cause a content of a detection process of the moving body included in the image data acquired by the acquisition unit to change in accordance with an analysis result of sensing data output by the sensor apparatus.

According to the present disclosure, there is provided an image processing method, including: acquiring image data in which a condition is captured where a sensor apparatus that outputs sensing data by sensing a state of a tool used at the time when handling a moving body is used; and causing a content of a detection process of the moving body included in the acquired image data to change in accordance with an analysis result of sensing data output by the sensor apparatus.

### Advantageous Effects of Invention

According to the present disclosure such as described above, a new and improved image processing apparatus and image processing method can be provided, capable of a reduction of an image processing load and an increase of an image processing performance by using sensing data acquired at a timing the same as that of image data.

Note that the effects described above are not necessarily limited, and along with or instead of the effects, any effect that is desired to be introduced in the present specification or other effects that can be expected from the present specification may be exhibited.

### Brief Description of Drawings

FIG. 1 is an explanatory diagram that shows an outline of an information processing system, in which an information processing apparatus is used, according to an embodiment of the present disclosure.
FIG. 2 is an explanatory diagram that shows a function configuration example of each apparatus of the information processing system according to an embodiment of the present disclosure.
FIG. 3 is an explanatory diagram that shows a function configuration example of an image data analysis unit 240 according to an embodiment of the present disclosure.
FIG. 4 is an explanatory diagram that shows a detection example of effective sections.
FIG. 5 is an explanatory diagram that shows a detection example of effective sections.
FIG. 6 is an explanatory diagram that shows a function configuration example of the image data analysis unit 240 according to an embodiment of the present disclosure.
FIG. 7 is an explanatory diagram that shows an example of a target range of a detection process of a tennis ball.
FIG. 8 is an explanatory diagram that shows an example of a target range of a detection process of a tennis ball.
FIG. 9 is an explanatory diagram that shows a function configuration example of the image data analysis unit 240 according to an embodiment of the present disclosure.
FIG. 10 is an explanatory diagram that shows an example of a prediction range of a tennis ball.
FIG. 11 is an explanatory diagram that shows an example of a prediction range of a tennis ball.
FIG. 12 is an explanatory diagram that shows a function configuration example of the image data analysis unit 240 according to an embodiment of the present disclosure.
FIG. 13 is an explanatory diagram that shows a function configuration example of the image data analysis unit 240 according to an embodiment of the present disclosure.
FIG. 14 is an explanatory diagram that shows an example of movement characteristics of a tennis ball hit by a tennis racket.
FIG. 15 is an explanatory diagram that shows a function configuration example of the image data analysis unit 240 according to an embodiment of the present disclosure.
FIG. 16 is an explanatory diagram that shows an example of a prediction range of a tennis ball.
FIG. 17 is an explanatory diagram that shows an example of a prediction range of a tennis ball.
FIG. 18 is an explanatory diagram that shows a function configuration example of the image data analysis unit 240 according to an embodiment of the present disclosure.
FIG. 19 is a flow chart that shows an operation example of an information processing apparatus 200 according to an embodiment of the present disclosure.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

The description will be given in the following order.
<1. Embodiment of the present disclosure>
   [1.1. Outline of the system]
   [1.2. Function configuration examples]
   [1.3. Operation example]
<2. Summary>

### <1. Embodiment of the present disclosure>

### [1.1. Outline of the system]

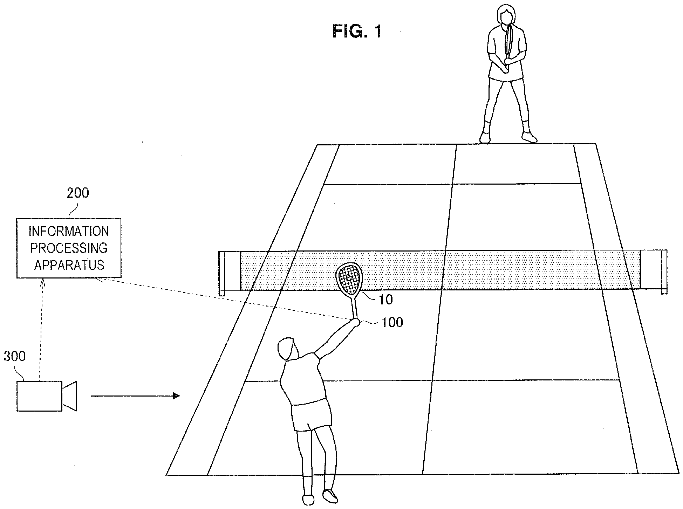

First, an outline of an information processing system, in which an information processing apparatus is used, according to an embodiment of the present disclosure will be described while referring to the figures. FIG. 1 is an explanatory diagram that shows an outline of the information processing system, in which an information processing apparatus is used, according to an embodiment of the present disclosure. Hereinafter, an outline of the information processing system, in which an information processing apparatus is used, according to an embodiment of the present disclosure will be described by using FIG. 1.

The information processing system shown in FIG. 1 is a system that analyzes a play operation of tennis, at the time when a user plays tennis. As shown in FIG. 1, the information processing system is constituted by including a sensor apparatus 100 mounted on a tennis racket 10, which is an example of a tool used at the time when handling a moving object of the present disclosure, or a hitting tool that causes a movement direction of a moving body to change by striking this moving object, an information processing apparatus 200 that analyzes a play operation of tennis of a user by acquiring data (sensing data) acquired by the sensor apparatus 100, and a camera 300 that captures a play operation of tennis of a user.

The sensor apparatus 100 according to an embodiment of the present disclosure is constituted, for example, so as to able to be mounted on a grip end portion of the tennis racket 10, and in this case, by mounting the sensor apparatus 100 on the tennis racket and playing tennis, a user can cause the sensor apparatus 100 to sense a play operation of tennis using the tennis racket. It is needless to say that the sensor apparatus 100 may be in a form built into the tennis racket 10. Further, the sensor apparatus 100 according to an embodiment of the present disclosure may be in a form built into a wrist band wrapped around the wrist of a user who uses the tennis racket 10.

The sensor apparatus 100 according to an embodiment of the present disclosure acquires sensing data showing a physical behavior (position, velocity, acceleration or the like) of the sensor apparatus 100 itself. A physical behavior of a user or tool may be reflected in this sensing data. The sensor apparatus 100 can include a one axis acceleration sensor, for example, used as a motion sensor, or a three axis, a six axis, or a nine axis acceleration sensor, gyro sensor, geomagnetic sensor or the like, for example, used as a motion sensor. Apart from these sensors, the sensor apparatus 100 may have one or a plurality of sensors that detect, for example, an angular velocity, vibration, temperature, position (for example, the position on the earth's surface represented by latitude and longitude, or a relative position with respect to a court or the like) or the like. The sensor apparatus 100 transmits time series data obtained from these sensors to the information processing apparatus 200.

The information processing apparatus 200 is an example of an image processing apparatus of the present disclosure. The information processing apparatus 200 analyzes a play operation of tennis of a user, by analyzing the time series data transmitted from the sensor apparatus 100. While the information processing apparatus 200 is illustrated as a server on a network, it may be anything, for example, if it is an information processing apparatus having a function that analyzes data by a calculation using a processor such as a Central Processing Unit (CPU). In another example, the information processing apparatus 200 may be, for example, a terminal apparatus such as smart phone, a tablet terminal, or various types of Personal Computers (PC). In the case where the information processing apparatus 200 is implemented as a terminal apparatus, the information processing apparatus 200 may output information showing an analyzed play operation of tennis of a user. Alternatively, in the case where the information processing apparatus 200 is implemented as a server, the information processing apparatus 200 may transmit information showing a decided play operation of tennis of a user to a client apparatus (not illustrated) such as a terminal apparatus, for example, that the user uses in his or her house. In addition, the information processing apparatus 200 may output statistical information such as how many times a user executes an operation, for example, based on an analysis result of a play operation of tennis of the user, and may output information showing a tendency of the user in each operation (for example, in the case of a ball game, the position where the ball is hit on a hitting tool, the power or rotation given to the ball or the like).

The camera 300 is an apparatus that captures an image, and in the present embodiment, captures the figure of a user (player), who plays tennis by using the tennis racket 10 on which the sensor apparatus 100 has been mounted, as a photographic subject. Therefore, the player captured by the camera 300 is an example of a photographic subject of the present disclosure. The image captured by the camera 300 includes a static image and a moving image. The camera 300 transmits an image capturing the figure of the user to the information processing apparatus 200. The information processing apparatus 200 analyzes the time series data transmitted from the sensor apparatus 100 and analyzes the image transmitted from the camera 300, and outputs this analysis result. That is, by capturing the figure of a player of tennis by using the tennis racket 10 on which the sensor apparatus 100 has been mounted, the camera 300 can capture an image of a time band that includes a time band of the sensing data acquired by the sensor apparatus 100.

Note that, in FIG. 1, while a state is shown where the information processing apparatus 200 and the camera 300 are present as separate apparatuses, the present disclosure is not limited to such an example. That is, it may be in a form where the camera 300 is built into the information processing apparatus 200, and an image captured by the camera 300 is recorded in the information processing apparatus 200 as it is.

The information processing apparatus 200 executes an image process such as specifying the location of a moving body, for example, a tennis ball, for the image captured by the camera 300. However, an image process for the image captured by the camera 300 will have a large load, and in particular, a high load will be applied to an image process in order not to mistakenly detect the location of a ball.

Accordingly, the information processing apparatus 200 according to an embodiment of the present disclosure uses information obtained by an analysis of the time series data transmitted from the sensor apparatus 100, at the time when executing an image process for the image captured by the camera 300. By using information obtained by an analysis of the time series data transmitted from the sensor apparatus 100 at the time of an execution of an image process for the image, the information processing apparatus 200 according to an embodiment of the present disclosure can cause the load at the time of the image process to reduce, and cause the processing performance at the time of the image process to improve.

Heretofore, an outline of the information processing system, in which an information processing apparatus is used, according to an embodiment of the present disclosure has been described by using FIG. 1. To continue, a function configuration example of the information processing system, in which an information processing apparatus is used, according to an embodiment of the present disclosure will be described.

### [1.2. Function configuration examples]

### (1) Function configuration example of each apparatus of the information processing system

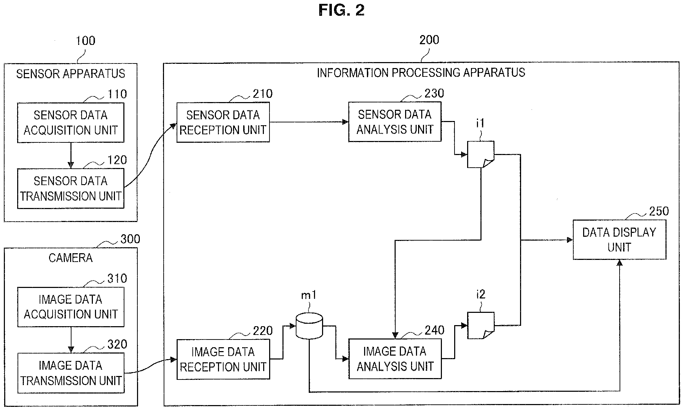

FIG. 2 is an explanatory diagram that shows a function configuration example of each apparatus of the information processing system according to an embodiment of the present disclosure. Hereinafter, a function configuration example of each apparatus of the information processing system according to an embodiment of the present disclosure will be described by using FIG. 2.

As shown in FIG. 2, the sensor apparatus 100 according to an embodiment of the present disclosure is constituted by including a sensor data acquisition unit 110, and a sensor data transmission unit 120. Further, as shown in FIG. 2, the camera 300 according to an embodiment of the present disclosure is constituted by including an image data acquisition unit 310, and an image data transmission unit 320.

Also, as shown in FIG. 2, the information processing apparatus 200 according to an embodiment of the present disclosure is constituted by including a sensor data reception unit 210, an image data reception unit 220, a sensor data analysis unit 230, an image data analysis unit 240, and a data display unit 250.

The sensor data acquisition unit 110 acquires sensing data showing a physical behavior (position, velocity, acceleration or the like) of the sensor apparatus 100 itself from a sensor (not illustrated) included inside the sensor apparatus 100. When sensing data is acquired from the sensor, the sensor data acquisition unit 110 sends the acquired sensing data to the sensor data transmission unit 120.

The sensor data transmission unit 120 transmits the sensing data sent from the sensor data acquisition unit 110 towards the information processing apparatus 200. Note that, the sensor data transmission unit 120 may execute, for example, an amplification of the sensing data, filtering of the sensing data of a threshold or less or the like, as a pre-process of transmission. For example, Bluetooth (registered trademark), a wireless Local Area Network (LAN) or the like may be used for the transmission of the sensing data by the sensor data transmission unit 120. Note that, since the sensing data may not necessarily be transmitted to the information processing apparatus 200 in real time, the sensing data may be transmitted to the information processing apparatus 200 from the sensor data transmission unit 120 by wired or wireless communication, for example, after a player ends a series of plays.

The image data acquisition unit 310 acquires image data captured by the camera 300. As described above, a static image and a moving image are included in the image data captured by the camera 300. The image data acquisition unit 310 sends the acquired image data to the image data transmission unit 320.

The image data transmission unit 320 may transmit the image data sent from the image data acquisition unit 310 towards the information processing apparatus 200, and Bluetooth (registered trademark), a wireless Local Area Network (LAN) or the like may be used, for example, for the transmission of the image data by the image data transmission unit 120. Further, the image data may be transmitted to the information processing apparatus 200 from the image data transmission unit 320 by wired or wireless communication, for example, after a player ends a series of plays.

The sensor data reception unit 210 receives the sensing data transmitted by the sensor data transmission unit 120. When the sensing data transmitted from the sensor data transmission unit 120 is received, the sensor data reception unit 210 sends this received sensing data to the sensor data analysis unit 230.

The image data reception unit 220 receives the image data transmitted by the image data transmission unit 320. When the image data transmitted from the image data transmission unit 320 is received, the image data reception unit 220 sends this received image data m1 to the image data analysis unit 240 and the data display unit 250.

In FIG. 2, while the sensor data reception unit 210 and the image data reception unit 220 are shown in separate blocks, the present disclosure is not limited to such an example. The sensor data reception unit 210 and the image data reception unit 220 may be constituted in a same block.

The sensor data analysis unit 230 executes an analysis process of the sensing data. The sensor data analysis unit 230 analyzes the sensing data by using technology such as that disclosed, for example, in WO 2013/069447. By analyzing the sensing data transmitted by the sensor apparatus 100, the sensor data analysis unit 230 can obtain various information related to the tennis racket 10 on which the sensor apparatus 100 is mounted, and a tennis ball hit back by the tennis ball 10. The impact time that is the time when a tennis ball hits the tennis racket 10, the type of swing of the tennis racket 10, the swing speed of the tennis racket 10, the ball speed of a tennis ball hit by the tennis racket 10, the spin amount of a tennis ball hit by the tennis racket 10, the impact spot (collision position of a tennis ball) on the racket surface of the tennis racket 10 or the like can be included, for example, in information obtained by having the sensor data analysis unit 230 analyze the sensing data.

The sensor data analysis unit 230 acquires the type of swing of the tennis racket 10, for example, based on information such as the velocity of the tennis racket 10, the inclination of the tennis racket 10, and the rotation amount of the tennis racket 10, obtained from the sensing data. Further, the sensor data analysis unit 230 can specify the impact spot on the racket surface of the tennis racket 10, for example, by comparing vibration characteristics of vibration data, and vibration characteristics for each position where a tennis ball collides of the tennis racket 10, based on vibration data for which vibrations are detected at the time when the tennis ball collides with the tennis racket 10 by the sensor apparatus 100 mounted at a portion different to the portion where the tennis ball collides.

Further, the sensor data analysis unit 230 estimates the velocity of the tennis racket 10 of the time of a collision at the attachment position of the sensor apparatus 100, for example, based on an acceleration change of the tennis racket 10 detected by a motion sensor. In addition, the sensor data analysis unit 230 converts the velocity at the attachment position of the sensor apparatus 100 into a velocity of the tennis racket 10 at the collision position of the tennis ball, for example, based on a rotation of the tennis racket 10 detected by a motion sensor.

In this way, the sensor data analysis unit 230 sends a sensor analysis result i1, in which is included various information related to the tennis racket 10 on which the sensor apparatus 100 is mounted, and a tennis ball hit back by the tennis ball 10, obtained by an analysis of the sensing data, to the image data analysis unit 240 and the data display unit 250.

The image data analysis unit 240 is an example of an image processing unit of the present disclosure. The image data analysis unit 240 executes an image analysis process for the image data m1 received by the image data reception unit 220. By having the image data analysis unit 240 analyze the image data m1, various information related to a play content of a player can be obtained. The position of a ball, the speed, the tracking, the spin amount, the falling point to a court, the position of a person, the movement speed, the movement distance or the like can be included, for example, as information obtained by having the image data analysis unit 240 analyze the image data m1. The position of a ball or the position of a person can be obtained by an analysis of the image data, the speed or the tracking can be obtained by differentiating, analyzing or the like the information obtained from an analysis of the image data, and the spin amount, the falling point or the like can be obtained by utilizing prior knowledge in the information obtained from an analysis of the image data or the like. The image data analysis unit 240 sends an image analysis result i2 obtained by an analysis of the image data to the data display unit 250. The above described position of a ball, speed, tracking, spin amount, falling point to a court, position of a person, movement speed, movement distance or the like can be included in this image analysis result i2.

In the present embodiment, the image data analysis unit 240 uses the sensor analysis result i1 obtained by an analysis of the sensing data, sent from the sensor data analysis unit 230, at the time of an analysis of the image data m1. By analyzing the image data m1 by using the sensor analysis result i1 obtained by an analysis of the sensing data, the image data analysis unit 240 can analyze the image data m1 more efficiently and cause the load to reduce, and can cause the analysis performance of the image data m1 to improve.

The data display unit 250 displays the image data m1 sent from the image data reception unit 220. The data display unit 250 can display these analysis results superimposed on the image data m1, by using the sensor analysis result i1 sent from the sensor data analysis unit 230, and the image analysis result i2 sent from the image data analysis unit 240, at the time of a display of the image data m1.

As described above, in the present disclosure, it may be in a form where the camera 300 is built into the information processing apparatus 200, and an image captured by the camera 300 is recorded in the information processing apparatus 200 as it is.

Heretofore, a function configuration example of each apparatus of the information processing system according to an embodiment of the present disclosure has been described by using FIG. 2. To continue, function configuration examples of the image data analysis unit 240, included in the information processing apparatus 200, according to an embodiment of the present disclosure will be described.

### (2) Function configuration example of the image data analysis unit (1)

By excluding the sections where a player does is not hitting a ball with the tennis racket 10 from a target of analysis, at the time when analyzing the image data m1 by the image data analysis unit 240, the analysis performance can be improved, by reducing the analysis processing amount of the image data analysis unit 240. Since the sections where a ball is not hit by the tennis racket 10 can be comprehended from information of an impact time included in the sensor analysis result i1, the image data analysis unit 240 can determine a section for which an analysis process of the image data is to be executed by using the information of an impact time. Hereinafter, a function configuration example of the image data analysis unit 240, in the case where determining a section for which an analysis process of image data is to be executed by using information of an impact time, will be described.

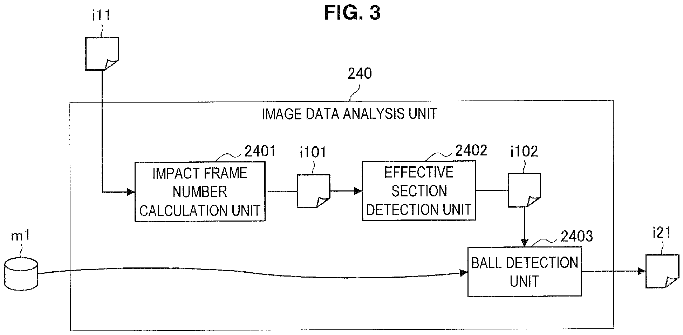

FIG. 3 is an explanatory diagram that shows a function configuration example of the image data analysis unit 240 according to an embodiment of the present disclosure. The example shown in FIG. 3 is a function configuration example of the image data analysis unit 240, in the case where determining a section for which an analysis process of image data is to be executed by using information of an impact time. Hereinafter, a function configuration example of the image data analysis unit 240 according to an embodiment of the present disclosure will be described by using FIG. 3.

As shown in FIG. 3, the image data analysis unit 240 according to an embodiment of the present disclosure is constituted by including an impact frame number calculation unit 2401, an effective section detection unit 2402, and a ball detection unit 2403.

The impact frame number calculation unit 2401 calculates a frame number of the image data m1 for an impact to the tennis racket 10 on which the sensor apparatus 100 has been mounted, by using information of a leading time of the image data m1, and of an impact time i11 obtained by an analysis of the sensing data sent from the sensor data analysis unit 230. The impact frame number calculation unit 2401 sends an impact frame number i101 to the effective section detection unit 2402.

The effective section detection unit 2402 detects an effective section of the image data m1 to be set to an analysis target, by using the impact frame number i101 sent from the impact frame number calculation unit 2401. When an effective section i102 of the image data m1 to be set to an analysis target is detected, the effective section detection unit 2402 sends this effective section i102 to the ball detection unit 2403.

The effective section detection unit 2402 refers to information of the impact frame number i101, for example, and a section where an impact interval is within a prescribed value (for example, an impact interval within 30 frames, in the image data m1 of 30 frames per second) can be detected as an effective section to be set to an analysis target of the image data m1, and a section where an impact interval exceeds a prescribed number can be detected as a non-effective section not to be set to an analysis target of the image data m1. By setting only a section where a rally in tennis continues to an effective section, and setting sections other than this effective section to non-effective sections, this leads to reducing the processing load of the ball detection unit 2403 of a later stage.

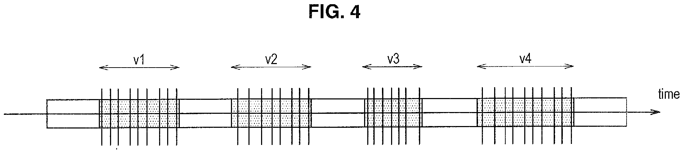

FIG. 4 is an explanatory diagram that shows a detection example of effective sections by the effective section detection unit 2402. The vertical lines of FIG. 4 show the times when there has been an impact to the tennis racket 10. Further, the sections shown by reference numerals v1 to v4 are effective sections detected by the effective section detection unit 2402. In this way, the effective section detection unit 2402 can detect sections where an impact interval is within a prescribed value as effective sections to be set to an analysis target of the image data m1.

The effective section detection unit 2402 again refers to information of the impact frame number i101, for example, and detects prescribed sections before and after this impact frame number i101 as effective sections to be set to an analysis target of the image data m1. In the case where detecting only a specific ball hit such as a serve, for example, by setting only the section where a series of operations of the serve is performed to an effective section, and setting the sections other than this effective section to non-effective sections, this leads to reducing the processing load of the ball detection unit 2403 of a later stage.

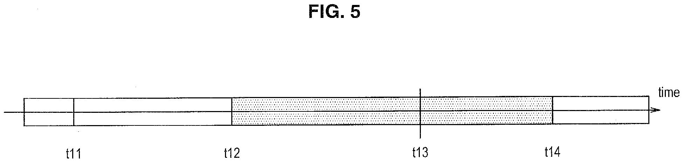

FIG. 5 is an explanatory diagram that shows a detection example of effective sections by the effective section detection unit 2402. The example shown in FIG. 5 is a detection example of effective sections by the effective section detection unit 2402, which sets, as an example, the occasion where a player hits a ball with the tennis racket 10 on which the sensor apparatus 100 is mounted. For example, a player holding a racket at a time t11 is obtained by an analysis of the sensing data. However, since there is still time up until the tennis racket 10 hits a serve at this point in time, the effective section detection unit 2402 does not detect the point in time of time t11 as an effective section.

Afterwards, the player hitting a serve at time t13 is respectively obtained by an analysis of the sensing data. The effective section detection unit 2402 decides that the player tosses the ball at time t12 a prescribed time before time t13, and the player ends a follow through of the serve at a time t14 a prescribed time after time t13, and detects prescribed times before and after the time t13 as effective sections. In this way, the effective section detection unit 2402 can detect sections of a prescribed time before and after an impact time as effective sections to be set to an analysis target of the image data m1.

The ball detection unit 2403 executes a process to detect the position of the tennis ball in the image data m1 for each frame. The ball detection unit 2403 outputs coordinates i21 of the tennis ball on each frame image, obtained as a result of detecting the position of the tennis ball. Note that, the detection process of the tennis ball executed by the ball detection unit 2403 is not limited to a specific technology, and an arbitrary technology can be used, for example, from among pattern matching, machine learning, background difference or the like that performs a comparison between patterns specified beforehand.

Also, the ball detection unit 2403 uses the effective section i102 detected by the effective section detection unit 2402, at the time of an execution of a process to detect the position of the tennis ball in the image data m1. That is, the ball detection unit 2403 executes a process to detect the position of the tennis ball in the image data m1, only in the effective section i102 detected by the effective section detection unit 2402. Since a process to detect the position of the tennis ball is executed only in the effective section i102, the ball detection unit 2403 does not execute the process in all of the sections.

In the present embodiment, while an impact frame number is obtained by the impact frame number calculation unit 2401, and an effective section to be set to a target of an image process is detected by using this impact frame number by the effective section detection unit 2402, the present disclosure is not limited to such an example. For example, the image data analysis unit 240 may detect the timing at which a specific operation has been performed by the player, from information obtained by an analysis of the sensing data sent from the sensor data analysis unit 230, and may detect the effective section i102 by the effective section detection unit 2402 by using this timing. A swing operation of the tennis racket 10 by the player, an impact of the tennis ball by the tennis racket 10, a completion of a follow through of the tennis racket 10 or the like can be included, for example, as the specific operation.

### (3) Function configuration example of the image data analysis unit (2)

While the image data analysis unit 240 sets the entire image of each frame to an analysis target, at the time when analyzing the image data m1, the range of an analysis target can be dynamically changed, by using the sensor analysis result i1 obtained by an analysis of the sensing data. For example, the instant of an impact when the tennis racket 10 hits a tennis ball is when the tennis ball is near to a person. Therefore, the image data analysis unit 240 narrows down the range of an analysis target to a range near to the person, at the timing of the impact and the timing in the vicinity of this. By narrowing down the range, the image data analysis unit 240 can cause the processing load at the time of a detection of the position of the tennis ball to reduce, and can cause the detection performance to improve. Hereinafter, a function configuration example of the image data analysis unit 240, in the case where determining a target range of an analysis process of image data by using information of an impact time, will be described.

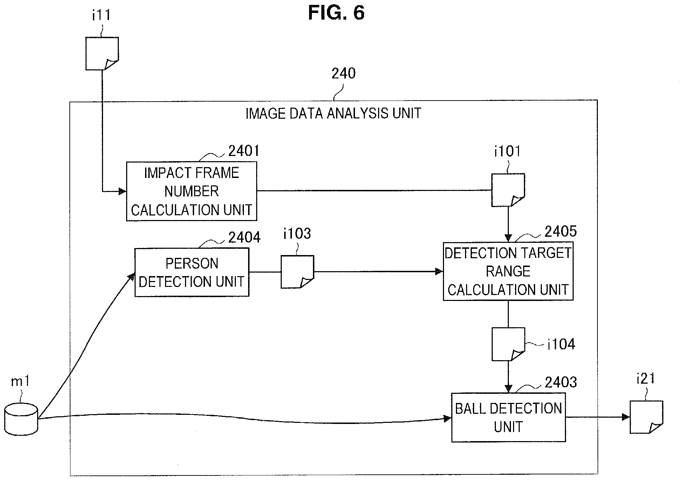

FIG. 6 is an explanatory diagram that shows a function configuration example of the image data analysis unit 240 according to an embodiment of the present disclosure. The example shown in FIG. 6 is a function configuration example of the image data analysis unit 240, in the case where determining a target range of an analysis process of image data by using information of an impact time. Hereinafter, a function configuration example of the image data analysis unit 240 according to an embodiment of the present disclosure will be described by using FIG. 6.

As shown in FIG. 6, the image data analysis unit 240 according to an embodiment of the present disclosure is constituted by including an impact frame number calculation unit 2401, a ball detection unit 2403, a person detection unit 2404, and a detection target range calculation unit 2405.

Similar to the description of FIG. 3, the impact frame number calculation unit 2401 calculates a frame number of the image data m1 for an impact to the tennis racket 10 on which the sensor apparatus 100 has been mounted. The impact frame number calculation unit 2401 sends an impact frame number i101 to the detection target range calculation unit 2405.

Similar to the description of FIG. 3, the ball detection unit 2403 executes a process to detect the position of the tennis ball in the image data m1 for each frame. The ball detection unit 2403 outputs coordinates i21 of the tennis ball on each frame image, obtained as a result of detecting the position of the tennis ball. Note that, the detection process of the tennis ball executed by the ball detection unit 2403 is not limited to a specific technology, and an arbitrary technology can be used, for example, from among pattern matching, machine learning, background difference or the like that performs a comparison between patterns specified beforehand.

The person detection unit 2404 executes a process to detect the position of a person in the image data m1 for each frame. The person detection unit 2404 outputs coordinates i103 of the person on each frame image, obtained as a result of detecting the position of the person. Note that, the detection process of the person executed by the person detection unit 2404 is not limited to a specific technology similar to that of the ball detection unit 2403, and an arbitrary technology can be used, for example, from among pattern matching, machine learning, background difference or the like that performs a comparison between patterns specified beforehand.

The detection capable range calculation unit 2405 determines a target range of the detection process of the tennis ball by the ball detection unit 2403 for each frame, by using the impact frame number i101 sent from the impact frame number calculation unit 2401, and the coordinates i103 of the person sent from the person detection unit 2404. The detection capable range calculation unit 2405 sends a determined detection target range i104 to the ball detection unit 2403.

The detection capable range calculation unit 2405 widens a target range of the detection process of the tennis ball by the ball detection unit 2403 to the entire range that the tennis ball may move, for the frame of the impact frame number i101, or a frame number that it not a frame number in the vicinity of this, in the image data m1. On the other hand, the detection capable range calculation unit 2405 narrows a target range of the detection process of the tennis ball by the ball detection unit 2403 to a range in the vicinity of a person who uses the tennis racket 10, for the frame of the impact frame number i101, and a frame number of a frame number in the vicinity of this, in the image data m1.

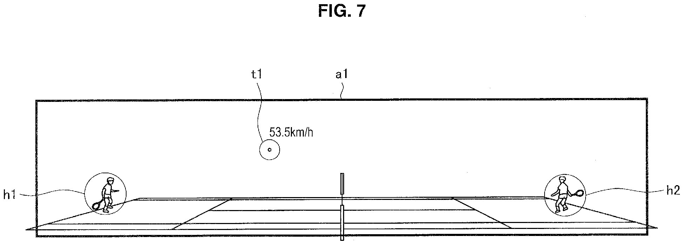

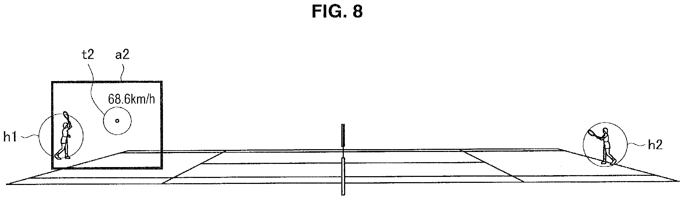

FIG. 7 and FIG. 8 are explanatory diagrams that show examples of a target range of the detection process of the tennis ball by the ball detection unit 2403, determined by the detection capable range calculation unit 2405. FIG. 7 is an example of an image of a frame in a certain frame number, which is not the impact frame number i101, or a frame number in the vicinity of this, in the image data m1. Further, FIG. 8 is an example of an image of a frame in a certain frame number, which is in the vicinity of the frame of the impact frame number i101, in the image data m1.

In a frame where an impact by a player has not been detected, such as in FIG. 7, the detection capable range calculation unit 2405 determines the target range of the detection process of the tennis ball by the ball detection unit 2403 to be a range a1. This range a1 is a range, for example, in which the tennis ball in the image data m1 may move, and may be a range set beforehand, or may be a range set by machine learning using the result of the detection process of the tennis ball by the ball detection unit 2403. Note that, reference numeral t1 shown in FIG. 7 shows a prescribed range that includes the position of the tennis ball detected by the ball detection unit 2403, reference numerals h1 and h2 show prescribed ranges that include the position of the person detected by the person detection unit 2404, and the person present in the range shown by the reference numeral h1 here is using the tennis racket 10 on which the sensor apparatus 100 has been mounted.

On the other hand, in a frame in which an impact by a player has been detected, and in the vicinity of this frame, for example, within 10 frames before and after a frame in which an impact has been detected, such as in FIG. 8, the detection capable range calculation unit 2405 determines the target range of the detection process of the tennis ball by the ball detection unit 2403 to be a range a2 narrower than the range a1. Note that, reference numeral t2 shown in FIG. 8 shows a prescribed range that includes the position of the tennis ball detected by the ball detection unit 2403.

At the time when determining this range a2, the detection capable range calculation unit 2405 may also take into consideration the inclination of the person. For example, within a play of tennis, the tennis ball will not be positioned behind the player, as long as the player does not swing and miss. Therefore, the detection capable range calculation unit 2405 may have behind the person excluded from the target range of the detection process of the tennis ball by the ball detection unit 2403, such as shown in FIG. 8.

The ball detection unit 2403 uses the detection target range i104 determined by the detection capable range calculation unit 2405, at the time of an execution of a process to detect the position of the tennis ball in the image data m1. That is, the ball detection unit 2403 executes a process to detect the position of the tennis ball in the image data m1, only for the detection target range i104 determined by the detection capable range calculation unit 2405. Since the ball detection unit 2403 executes a process to detect the position of the tennis ball, only for the detection target range i104, and not in the entire range of the image, a reduction of the load at the time of the detection process and an improvement of the detection performance become possible.

### (4) Function configuration example of the image data analysis unit (3)

By narrowing a search range by predicting a movement direction of a target object, at the time when analyzing the image data m1, the image data analysis unit 240 can raise the detection efficiency of the target object. For example, in the case where detecting the position of the tennis ball from the image data m1, the image data analysis unit 240 can raise the detection efficiency of the tennis ball, by narrowing a search range by predicting an approximate position of the tennis ball in the frame of a detection target, by taking into consideration the position of the tennis ball in the frames before the frame of a detection target.

However, when the player hits back the tennis ball with the tennis racket, the movement direction of the tennis ball will change by this timing. When it is decided that the tennis ball is moving in a direction the same as the movement direction of the tennis ball before being hit back, regardless of the player hitting back the tennis ball with the tennis racket, the tennis ball is not present at a predicted position, and it may be necessary for the image data analysis unit 240 to newly search again. Therefore, when determining a search range simply by the movement direction of the tennis ball, it is possible for it to take time for the image data analysis unit 240 to discover the location of the tennis ball.

Accordingly, the image data analysis unit 240 switches the direction that the tennis ball is predicted to move before and after the timing of an impact (hereinafter, also called a "prediction direction"), and sets a prediction range based on this switched prediction direction. By switching the prediction direction of the tennis ball before and after the timing of an impact, the image data analysis unit 240 can cause the processing load at the time of a detection of the position of the tennis ball to reduce, and can cause the detection performance to improve. Hereinafter, a function configuration example of the image data analysis unit 240, in the case where switching the prediction direction of the tennis ball by using information of an impact time, will be described.

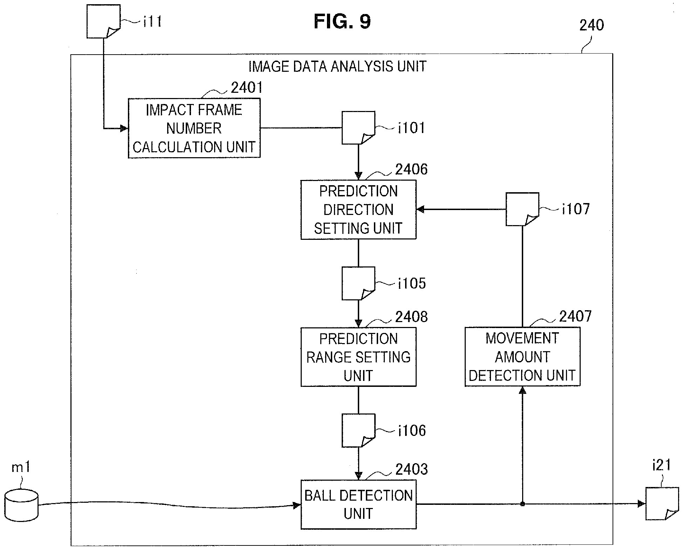

FIG. 9 is an explanatory diagram that shows a function configuration example of the image data analysis unit 240 according to an embodiment of the present disclosure. The example shown in FIG. 9 is a function configuration example of the image data analysis unit 240, in the case where setting the prediction direction and the prediction range of the tennis ball by using information of an impact time. Hereinafter, a function configuration example of the image data analysis unit 240 according to an embodiment of the present disclosure will be described by using FIG. 9.

As shown in FIG. 9, the image data analysis unit 240 according to an embodiment of the present disclosure is constituted by including an impact frame number calculation unit 2401, a ball detection unit 2403, a prediction direction setting unit 2406, a movement amount detection unit 2407, and a prediction range setting unit 2408.

Similar to the description of FIG. 3, the impact frame number calculation unit 2401 calculates a frame number of the image data m1 for an impact to the tennis racket 10 on which the sensor apparatus 100 has been mounted. The impact frame number calculation unit 2401 sends an impact frame number i101 to the prediction direction setting unit 2406.

Similar to the descriptions of FIG. 3 and FIG. 6, the ball detection unit 2403 executes a process to detect the position of the tennis ball in the image data m1 for each frame. The ball detection unit 2403 outputs coordinates i21 of the tennis ball on each frame image, obtained as a result of detecting the position of the tennis ball. The coordinates i21 of the tennis ball on each frame image are also sent to the movement amount detection unit 2407. Note that, the detection process of the tennis ball executed by the ball detection unit 2403 is not limited to a specific technology, and an arbitrary technology can be used, for example, from among pattern matching, machine learning, background difference or the like that performs a comparison between patterns specified beforehand. In the configuration example shown in FIG. 9, the ball detection unit 2403 detects the position of the tennis ball in the image data m1, based on a prediction range i106 sent from the prediction range setting unit 2408, which will be described below.

The movement amount detection unit 2407 detects a movement amount of the tennis ball in the image data m1, by using the coordinates i21 of the tennis ball on each frame image sent from the ball detection unit 2403. Specifically, the movement amount detection unit 2407 detects a movement amount of the tennis ball in the image data m1, by comparing the coordinates of the tennis ball of the present frame and the coordinates of the tennis ball of the frame one frame before. The movement amount detection unit 2407 sends a detected movement amount i107 of the tennis ball to the prediction direction setting unit 2406. Note that, the movement amount i107 of the tennis ball detected by the movement amount detection unit 2407 is a vector amount that includes information of the direction.

The prediction direction setting unit 2406 sets a direction that the tennis ball is likely to move in the following frame, by using the impact frame number i101 sent from the impact frame number calculation unit 2401, and the movement amount i107 of the tennis ball sent from the movement amount detection unit 2407. The prediction direction setting unit 2406 sends a prediction direction i105 of the tennis ball to the prediction range setting unit 2408.

If the following frame is not a frame of the frame number following the impact frame number i101, the prediction direction setting unit 2406 sets the direction that the tennis ball is likely to move in the following frame to a direction the same as the movement direction obtained from the movement amount i107 of the tennis ball. On the other hand, if the following frame is a frame of the frame number following the impact frame number i101, the prediction direction setting unit 2406 sets the direction that the tennis ball is likely to move in the following frame to a direction opposite to the movement direction obtained from the movement amount i107 of the tennis ball.

The prediction range setting unit 2408 predicts a range in which the tennis ball is likely to move in the following frame, based on the prediction direction i105 of the tennis ball set by the prediction direction setting unit 2406, and sets a prediction range. The prediction range setting unit 2408 sends a set prediction range i106 to the ball detection unit 2403. The left-top coordinates, the width, and the height in a frame image of the prediction range can be included in the prediction range i106.

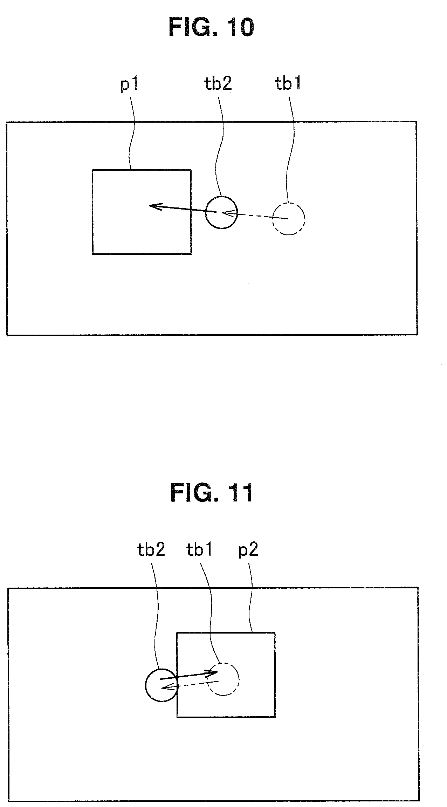

FIG. 10 and FIG. 11 are explanatory diagrams that show examples of a prediction range of a tennis ball set by the prediction range setting unit 2408, based on a prediction direction of the tennis ball set by the prediction direction setting unit 2406. The example shown in FIG. 10 is a setting example of a prediction range of the tennis ball by the prediction range setting unit 2408 at the occasion when not an impact timing. Further, FIG. 11 is a setting example of a prediction range of the tennis ball by the prediction range setting unit 2408, at the occasion when an impact timing. In FIG. 10 and FIG. 11, reference numeral tb1 shows the position of the tennis ball two frames before a frame that becomes a setting target of a prediction range of the tennis ball, and reference numeral tb2 shows the position of the tennis ball one frame before a frame that becomes a setting target of a prediction range of the tennis ball.

At the occasion when not an impact timing, the prediction direction setting unit 2406 sets the prediction direction i105 of the tennis ball, by deciding that the tennis ball moves in a same direction (forward direction). Also, the prediction range setting unit 2408 sets the prediction range i106, based on the prediction direction i105 of the tennis ball set by the prediction direction setting unit 2406. Reference numeral p1 of FIG. 10 is an example of a prediction range set by the prediction range setting unit 2408, at the occasion when not an impact timing.

On the other hand, at the occasion when an impact timing, the prediction direction setting unit 2406 sets the prediction direction i105 of the tennis ball, by deciding that the tennis ball moves in a counter direction (opposite direction) to the movement direction up until now. Also, the prediction range setting unit 2408 sets the prediction range i106, based on the prediction direction i105 of the tennis ball set by the prediction direction setting unit 2406. Reference numeral p2 of FIG. 11 is an example of a prediction range set by the prediction range setting unit 2408, at the occasion when an impact timing.

In this way, by causing the prediction direction of the tennis ball to change by whether or not it is an impact timing, the image data analysis unit 240 can cause the processing load at the time of a detection of the position of the tennis ball to reduce, and can cause the detection performance to improve.

Note that, at the time when a player hits the tennis ball with the tennis racket, it will not be limited to the tennis ball flying in the completely opposite direction. It is also possible for the tennis ball to fly upwards or fly downwards due to a misshot or the like of the player. Therefore, the prediction range setting unit 2408 may set a prediction range, at the occasion when an impact timing, wider than that of the occasion when not an impact timing.

Further, the prediction range setting unit 2408 may set the prediction range of the tennis ball to both directions of a forward direction and an opposite direction, in the frame of an impact timing and the frames before and after this impact timing. Also, the prediction range setting unit 2408 may switch the weightings of the predictions, so as to enlarge the weighting of the forward direction, in the frames before an impact timing, and may enlarge the weighting of the opposite direction, in the frames after an impact timing. That is, in the case where something like a tennis ball is detected in both the forward direction and the opposite direction, the ball detection unit 2403 may set the weighting of the forward direction by the prediction range setting unit 2408 to be enlarged, if before an impact timing, and may decide that the detection in the forward direction is that of a tennis ball.

If a synchronization of times is completely obtained, between the sensing data transmitted from the sensor apparatus 100 and the image data transmitted from the camera 300, when the above described technique is used for changing the prediction direction of the tennis ball by whether or not it is an impact timing, it can contribute to a reduction of the processing load at the time of a detection of the position of the tennis ball by the image data analysis unit 240, and an improvement of the detection performance. However, a case can be considered where an impact timing is not accurately determined, such as the case of a delay of an acquisition time of the sensing data, or where a synchronization of times is not completely taken between the sensing data and the image data. By considering such a case, the image data analysis unit 240 may acquire information of an impact section, from the sensor data analysis unit 230, and may set the prediction direction of the tennis ball at this impact section to both directions of the forward direction and the opposite direction. By setting the prediction direction of the tennis ball at an impact section to both directions, it becomes possible for the image data analysis unit 240 to accurately detect the position of the tennis ball, even in the case where an impact timing is not accurately determined.

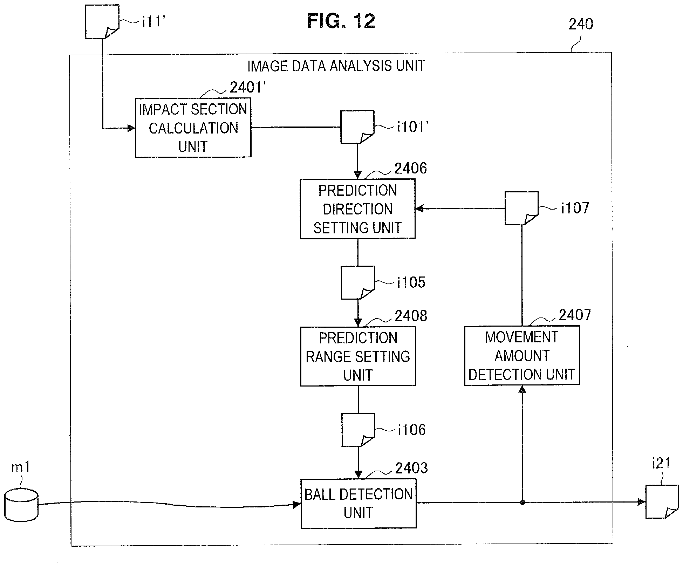

FIG. 12 is an explanatory diagram that shows a function configuration example of the image data analysis unit 240 according to an embodiment of the present disclosure. The example shown in FIG. 12 is a function configuration example of the image data analysis unit 240, in the case where setting the prediction direction and the prediction range of the tennis ball by using information of an impact section. Hereinafter, a function configuration example of the image data analysis unit 240 according to an embodiment of the present disclosure will be described by using FIG. 12.

As shown in FIG. 12, the image data analysis unit 240 according to an embodiment of the present disclosure is constituted by including an impact section calculation unit 2401', a ball detection unit 2403, a prediction direction setting unit 2406, a movement amount detection unit 2407, and a prediction range setting unit 2408.

The impact section calculation unit 2401' calculates a section of the frame of the image data m1, for an impact to the tennis racket 10 on which the sensor apparatus 100 has been mounted. The impact section calculation unit 2401' uses an impact time and impact error margin i11' sent from the sensor data analysis unit 230, at the time of a calculation of a section for an impact. The impact error margin 11' can be obtained from a time difference or the like between the sensing data and the image data, for example, at a delay time of the acquisition time of the sensing data. The impact section calculation unit 2401' can calculate a section for an impact, from the impact time and impact error margin 11'. The impact section calculation unit 2401' sends a calculated impact section i101' to the prediction direction setting unit 2406.

The prediction direction setting unit 2406 sets the prediction direction of the tennis ball, according to whether or not the following frame is an impact section. If it is not at an impact section, the prediction direction setting unit 2406 sets the prediction direction i105 of the tennis ball, by deciding that the tennis ball moves in the forward direction. On the other hand, if it is at an impact section, the prediction direction setting unit 2406 sets the prediction direction i105 of the tennis ball, by deciding that the tennis ball moves in the opposite direction.

In this way, by calculating an impact section, and setting the prediction direction of the tennis ball in accordance with this impact section, it becomes possible for the image data analysis unit 240 to accurately detect the position of the tennis ball, even in the case where an impact timing is not accurately determined.

### (5) Function configuration example of the image data analysis unit (4)

As described above, by narrowing a search range by predicting a movement direction of a target object, at the time when analyzing the image data m1, the image data analysis unit 240 can raise the detection efficiency of the target object. For example, in tennis, the characteristics of the movement of a ball hit by a tennis racket will change, due to the swing type of the tennis racket by a player, the application way of spin to the tennis ball or the like.

Therefore, by adjusting the prediction range of the tennis ball, by referring to information of this swing type, the detection process of the tennis ball by the image data analysis unit 240 can be reduced, and the detection performance can be improved. Hereinafter, a function configuration example of the image data analysis unit 240, in the case where adjusting the prediction range of a tennis ball by using the characteristics of the movement of the ball, will be described.

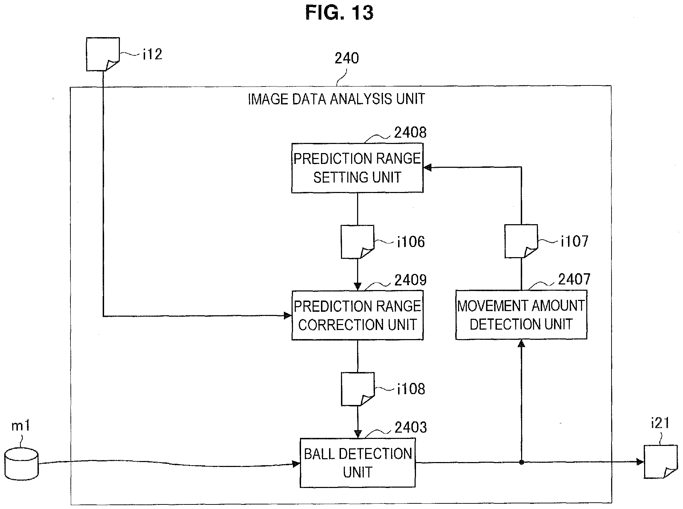

FIG. 13 is an explanatory diagram that shows a function configuration example of the image data analysis unit 240 according to an embodiment of the present disclosure. The example shown in FIG. 13 is a function configuration example of the image data analysis unit 240, in the case where adjusting the prediction range of a tennis ball by using the characteristics of the movement of the ball. Hereinafter, a function configuration example of the image data analysis unit 240 according to an embodiment of the present disclosure will be described by using FIG. 13.

As shown in FIG. 13, the image data analysis unit 240 according to an embodiment of the present disclosure is constituted by including a ball detection unit 2403, a prediction range setting unit 2408, and a prediction range correction unit 2409.

Similar to the descriptions of FIG. 3, FIG. 6, and FIG. 9, the ball detection unit 2403 executes a process to detect the position of the tennis ball in the image data m1 for each frame. The ball detection unit 2403 detects the position of the tennis ball in the image data m1, based on a prediction range after correction i108 sent from the prediction range correction unit 2409, which will be described below.

Similar to the description of FIG. 9, the prediction range setting unit 2408 predicts a range in which the tennis ball is likely to move in the following frame, based on a prediction direction i105 (not illustrated in FIG. 13) of the tennis ball set by the prediction direction setting unit 2406 (not illustrated in FIG. 13), and sets a prediction range. The prediction range setting unit 2408 sends a set prediction range i106 to the prediction range correction unit 2409. The left-top coordinates, the width, and the height in a frame image of the prediction range can be included in the prediction range i106.

The prediction range correction unit 2409 corrects the prediction range i106 sent from the prediction range setting unit 2408, by using a swing type and spin amount i12, sent from the sensor data analysis unit 230. The prediction range correction unit 2409 sends the prediction range after correction i108, for which the prediction range i106 sent from the prediction range setting unit 2408 is corrected, to the ball detection unit 2403. The left-top coordinates, the width, and the height in a frame image of the prediction range can be included in the prediction range after correction i108.

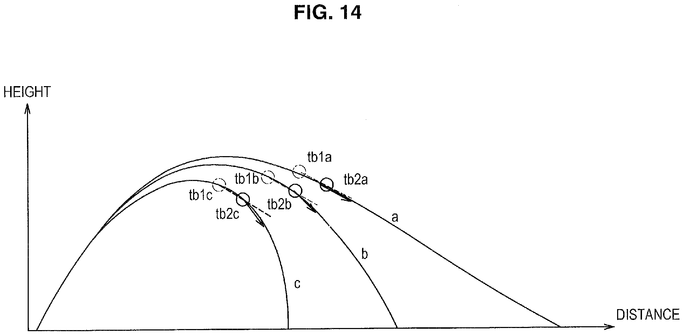

FIG. 14 is an explanatory diagram that shows an example of movement characteristics of the tennis ball hit by the tennis racket. The track of a of FIG. 14 is an example of a track of the case where the player hits so that the tennis ball extends, the track of b shows an example of a track of the case where the player hits with a usual way of hitting, and the track of c is an example of a track of the case where the player hits so that the tennis ball falls without extending. Reference numerals tbla, tblb, and tb1c respectively show the positions of the tennis ball at a certain time on the tracks of a, b, and c, and reference numerals tb2a, tb2b, and tb2c respectively show the positions of the tennis ball at a different certain time on the tracks of a, b, and c. A track is determined in accordance with the swing type by the player, or the application way of spin to the tennis ball. Further, this spin type or application way of spin is obtained by an analysis of the sensing data by the sensor data analysis unit 230.

For example, when it is found that the tennis ball is flying in a track such as a of FIG. 14 from the swing type and spin amount i12, and when it is found that the tennis ball is flying in a track such as a of FIG. 14 from the swing type and spin amount i12, for example, the prediction range correction unit 2409 causes the prediction range i106 set by the prediction range setting unit 2408 to move to the upper side in the height direction of the image. Further, for example, when it is found that the tennis ball is flying in a track such as c of FIG. 14 from the swing type and spin amount i12, the prediction range correction unit 2409 causes the prediction range i106 set by the prediction range setting unit 2408 to move to the lower side in the height direction of the image.

In this way, by correcting the prediction range i106 by using information of the spin type and spin amount i12, the image data analysis unit 240 can cause the processing load at the time of a detection of the position of the tennis ball to reduce, and can cause the detection performance to improve.

### (6) Function configuration example of the image data analysis unit (5)

As described above, by narrowing a search range by predicting a movement direction of a target object, at the time when analyzing the image data m1, the image data analysis unit 240 can raise the detection efficiency of the target object. At this time, by considering a movement velocity of this target object, in addition to the movement direction of the target object, if the movement velocity of the target object is understood beforehand, the detection process of a tennis ball by the image data analysis unit 240 can be reduced, and the detection performance can be improved. Hereinafter, a function configuration example of the image data analysis unit 240, in the case where adjusting the prediction range of a tennis ball by using a movement velocity of the ball, will be described.

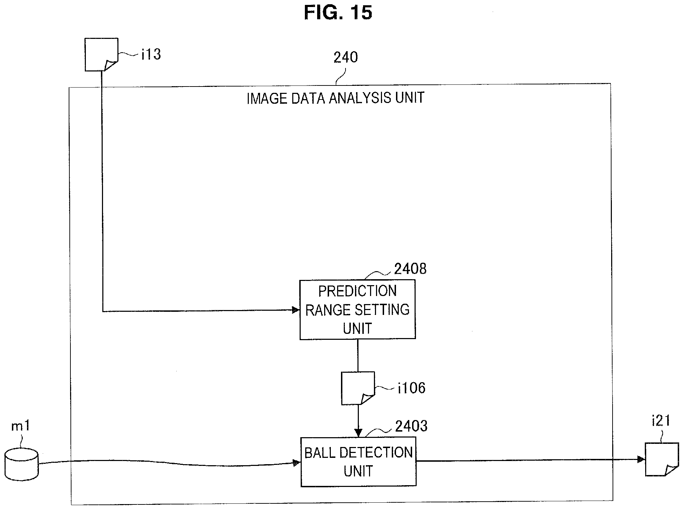

FIG. 15 is an explanatory diagram that shows a function configuration example of the image data analysis unit 240 according to an embodiment of the present disclosure. The example shown in FIG. 15 is a function configuration example of the image data analysis unit 240, in the case where adjusting the prediction range of a tennis ball by using a movement velocity of the ball. Hereinafter, a function configuration example of the image data analysis unit 240 according to an embodiment of the present disclosure will be described by using FIG. 15.

As shown in FIG. 15, the image data analysis unit 240 according to an embodiment of the present disclosure is constituted by including a ball detection unit 2403, and a prediction range setting unit 2408.

Similar to the descriptions of FIG. 3, FIG. 6, FIG. 9, and FIG. 13, the ball detection unit 2403 executes a process to detect the position of the tennis ball in the image data m1 for each frame. The ball detection unit 2403 detects the position of the tennis ball in the image data m1, based on a prediction range i106 sent from the prediction range setting unit 2408, which will be described below.

Similar to the description of FIG. 9, the prediction range setting unit 2408 predicts a range in which the tennis ball is likely to move in the following frame, based on a prediction direction i105 (not illustrated in FIG. 13) of the tennis ball set by the prediction direction setting unit 2406 (not illustrated in FIG. 13), and sets a prediction range. In the configuration example shown in FIG. 15, the prediction range setting unit 2408 predicts the range in which the tennis ball is likely to move in the following frame by using a ball speed i13 sent from the sensor data analysis unit 230, obtained by an analysis of the sensing data by the sensor data analysis unit 230.

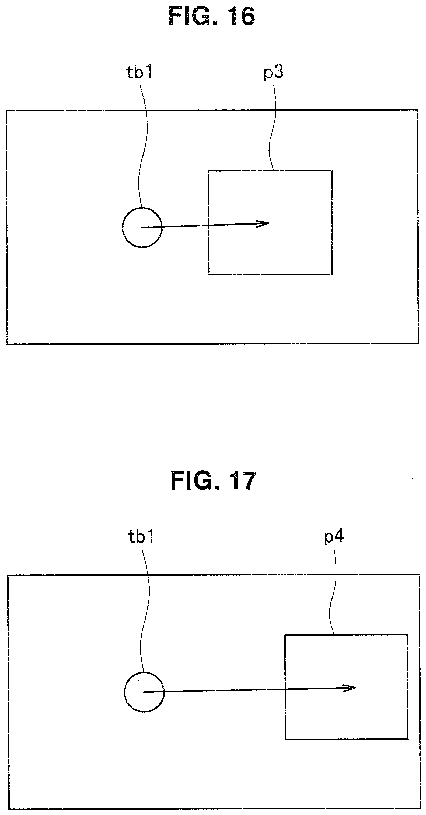

FIG. 16 and FIG. 17 are explanatory diagrams that show setting examples of the prediction range of the tennis ball using a ball spin i13 by the prediction range setting unit 2408. Reference numeral tb1 of FIG. 16 and FIG. 17 shows the position of the tennis ball at a certain time, the arrow within the figures shows the velocity of the tennis ball, that is, a movement amount of the tennis ball in one frame, and reference numerals p3 and p4 respectively show the range in which the tennis ball is likely to move in the following frame, set by the prediction range setting unit 2408.

In this way, by adjusting the prediction range of the tennis ball by using the movement velocity of the tennis ball, the image data analysis unit 240 can cause the processing load at the time of a detection of the position of the tennis ball to reduce, and can cause the detection performance to improve.

The ball detection unit 2403 may cause the detection technique of the time of a detection of the position of the tennis ball to change, in accordance with the movement velocity of the tennis ball. For example, in the case where the movement velocity of the tennis ball is faster than a prescribed value, the ball detection unit 2403 may detect the position of the tennis ball by template matching, and in the case where less than a prescribed value, the ball detection unit 2403 may detect the position of the tennis ball by a gradient method.

Heretofore, function configuration examples of the image data analysis unit 240 have been shown by including five examples. By combining the above described processes, the image data analysis unit 240 can expect to have a further reduction of the processing load at the time of a detection of the position of the tennis ball, and improvement of the detection performance. To continue, a function configuration example of the image data analysis unit 240 of the time when the above described five function configuration examples are combined will be described.

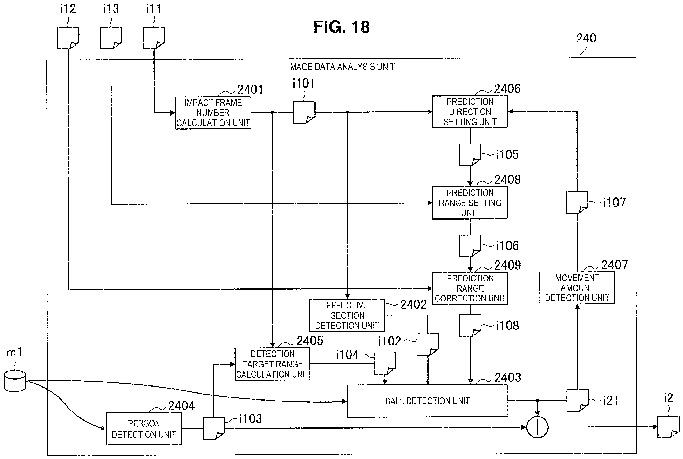

FIG. 18 is an explanatory diagram that shows a function configuration example of the image data analysis unit 240 according to an embodiment of the present disclosure. The example shown in FIG. 18 is a function configuration example of the image data analysis unit 240 of the time when the above described five function configuration examples are combined. Therefore, a description will be omitted for the portions that overlap with the above described descriptions.

The image data analysis unit 240 shown in FIG. 18 may execute various data processes, for example, a calculation process of the ball speed, or a calculation process of the movement amount of a ball or a person, by using coordinates i21 of the tennis ball in each frame image obtained as a result of the processes by the ball detection unit 2403, and person coordinates i103 on each frame image obtained as a result of the processes by the person detection unit 2404. Also, the image data analysis unit 240 outputs a result of the various data processes as an image analysis result i2. As described above, the above described position of a ball, speed, tracking, spin amount, falling point to a court, position of a person, movement speed, the movement distance or the like can be included in the image analysis result i2.

Heretofore, a function configuration example of the image data analysis unit 240 according to an embodiment of the present disclosure has been described. By having a configuration such as that of FIG. 18, the image data analysis unit 240 according to an embodiment of the present disclosure can perform a ball detection process with a low load and a high performance, using an analysis result of sensing data. To continue, an operation example of the information processing apparatus 200 according to an embodiment of the present disclosure will be described.

### [1.3. Operation example]

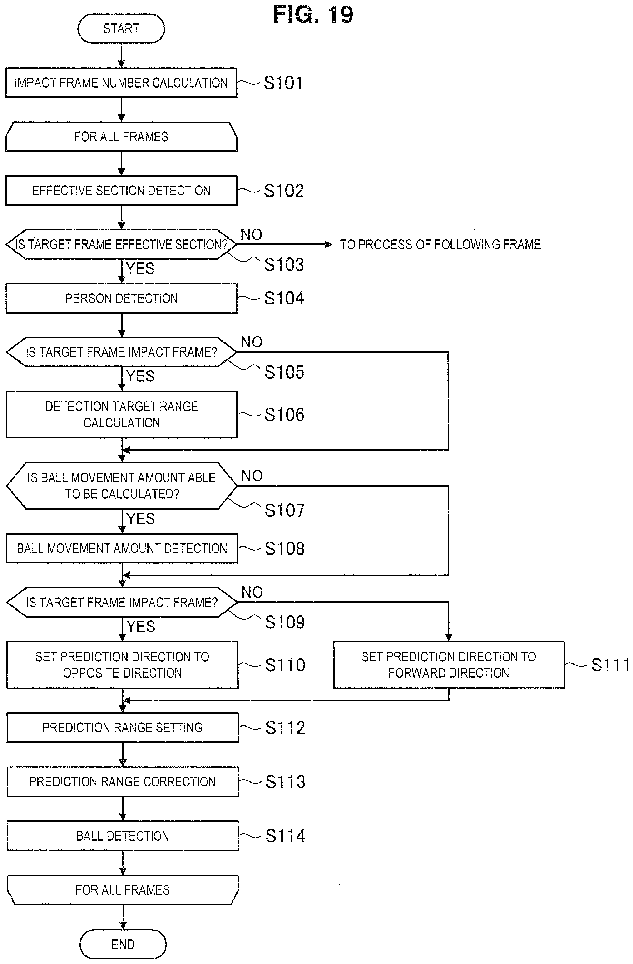

FIG. 19 is a flow chart that shows an operation example of the information processing apparatus 200 according to an embodiment of the present disclosure. The example shown in FIG. 19 is an operation example of the information processing apparatus 200, at the time when executing a detection process of a tennis ball for the image data m1, by using an analysis result of sensing data. Hereinafter, an operation example of the information processing apparatus 200 according to an embodiment of the present disclosure will be described by using FIG. 19.

At the time when executing a detection process of a tennis ball for the image data m1, first the information processing apparatus 200 calculates an impact frame number in the image data m1 (step S101). This calculation of an impact frame number of step S101 is calculated by the impact frame number calculation unit 2401, by using an impact time i11.

When an impact frame number in the image data m1 is calculated in step S101, to continue, the information processing apparatus 200 executes the following series of processes, for all the frames of the image data m1. The information processing apparatus 200 detects an effective section that becomes a target of a detection process of the tennis ball, by using the impact frame number calculated in the above step S101 (step S102). This detection process of an effective section of step S102 is executed by the effective section detection unit 2402.

When an effective section that becomes a target of a detection process of the tennis ball is detected in step S102, to continue, the information processing apparatus 200 decides whether or not the frame of a processing target is in the effective section (step S103). This decision process of step S103 is executed, for example, by the ball detection unit 2403.

As a result of the decision of step S103, if the frame of a processing target is not in the effective section (step S103, No), this frame will not be a target of the detection process of the tennis ball, and so the information processing apparatus 200 moves to the process of the following frame by returning to step S102. On the other hand, as a result of the decision of step S103, if the frame of a processing target is in the effective section (step S103, Yes), to continue, the information processing apparatus 200 executes a person detection process for an image of this frame (step S104). This person detection process of step S104 is executed by the person detection unit 2404.

To continue, the information processing apparatus 200 decides whether or not this frame is an impact frame (step S105). Here, whether or not it is an impact frame is decided by the detection target range calculation unit 2405, for example, by using information of the impact frame number.

As a result of the decision of step S105, if this frame is an impact frame (step S105, Yes), to continue, the information processing apparatus 200 calculates a detection target range of the tennis ball, for the frame of a processing target (step S106). This calculation process of step S106 is executed by the detection target range calculation unit 2405. On the other hand, as a result of the decision of step S105, if this frame is not an impact frame (step S105, No), the information processing apparatus 200 skips this process of step S106.

To continue, the information processing apparatus 200 decides whether or not a movement amount of the tennis ball can be calculated from the detection result of the tennis ball of a most recent frame (step S 107). Whether or not this movement amount of the tennis ball can be calculated is decided by the movement amount detection unit 2407, for example, by whether or not the position of the tennis ball can be detected by the ball detection unit 2403 in one frame before and two frames before.

As a result of the decision of step S107, in the case where the movement amount of the tennis ball can be calculated from the detection result of the tennis ball of a most recent frame (step S107, Yes), to continue, the information processing apparatus 200 detects the movement amount of the tennis ball from the detection result of the tennis ball of a most recent frame (step S 108). This detection process of step S108 is executed by the movement amount detection unit 2407. On the other hand, as a result of the decision of step S107, in the case where the movement amount of the tennis ball is not able to be calculated from the detection result of the tennis ball of a most recent frame (step S107, No), the information processing apparatus 200 skips this process of step S108.

To continue, the information processing apparatus 200 decides whether or not this frame is an impact frame (step S 109). Here, whether or not it is an impact frame is decided by the prediction direction setting unit 2406, for example, by using information of the impact frame number.

As a result of the decision of step S109, if this frame is an impact frame (step S109, Yes), to continue, the information processing apparatus 200 sets a prediction direction of the tennis ball to the opposite direction to the direction that the tennis ball has moved up until now, for the frame of a processing target (step S110). On the other hand, as a result of the decision of step S109, if this frame is not an impact frame (step S109, No), to continue, the information processing apparatus 200 sets the prediction direction of the tennis ball to the forward direction the same as the direction that the tennis ball has moved up until now, for the frame of a processing target (step S111). The prediction direction of the tennis ball is set by the prediction direction setting unit 2406.

To continue, the information processing apparatus 200 sets a prediction range of the tennis ball, for the frame of a processing target (step S112). The prediction range of the tennis ball is set by the prediction range setting unit 2408. The prediction range setting unit 2408 may use the prediction direction of the tennis ball, at the time of a setting of the prediction range of the tennis ball.

To continue, the information processing apparatus 200 corrects the prediction range of the tennis ball, for the frame of a processing target (step S113). The prediction range of the tennis ball is corrected by the prediction range correction unit 2409, by using the swing type and swing amount i12.

To continue, the information processing apparatus 200 executes the detection process of the tennis ball, for the frame of a processing target (step S114). The detection process of the tennis ball is executed by the ball detection unit 2403. The ball detection unit 2403 may be set in the above step S112, at the time of an execution of the detection process of the tennis ball, and may be executed for the prediction range of the tennis ball corrected in the above step S113.

The information processing apparatus 200 executes the series of processes from the above step S102 up until step S114 for all the frames of the image data m1. When the series of processes is executed for all the frames of the image data m1, the information processing apparatus 200 ends the process.

By executing the processes shown in FIG. 19, the information processing apparatus 200 can perform a ball detection process with a low load and a high performance, using an analysis result of sensing data.

Note that, it is possible for the above described series of processes to be similarly executed for the case where a plurality of people are using the tennis racket 10 on which the sensor apparatus 100 has been mounted. It is possible for the information processing apparatus 200 to perform identification from sensing data transmitted from the sensor apparatus 100, if information that identifies the sensor apparatus 100 is included in the sensing data transmitted from the sensor apparatus 100. Therefore, by comparing and checking an identification result of sensing data and an analysis result of image data, the information processing apparatus 200 enables a ball detection process such as that described above.

### <2. Summary>

According to an embodiment of the present disclosure such as described above, the information processing apparatus 200 is provided that more efficiently analyzes image data transmitted from the camera 300, by using an analysis result of sensing data acquired in the sensor apparatus 100, at a timing the same as that of the acquisition of the image data by the camera 300.

By using an analysis result of sensing data acquired in the sensor apparatus 100, it becomes possible for the information processing apparatus 200 according to an embodiment of the present disclosure to perform a setting of an effective section to execute an analysis process of image data, perform a setting of a detection target range that becomes a target of an analysis process of the image data, and perform an effective prediction of a movement direction or movement location of a target object of detection. That is, by using information such as an impact time, a ball speed, a track of a ball or the like, obtained from an analysis result of sensing data acquired in the sensor apparatus 100, the information processing apparatus 200 according to an embodiment of the present disclosure can perform a setting of an effective section to execute an analysis process of image data, perform a setting of a detection target range that becomes a target of an analysis process of the image data, and effectively predict a movement direction or movement location of a target object of detection.

Therefore, by using an analysis result of sensing data acquired in the sensor apparatus 100, the information processing apparatus 200 according to an embodiment of the present disclosure can perform a ball detection process with a low load and a high performance.

Steps in processes executed by devices in this specification may not be necessarily executed chronologically in the order described in a sequence chart or a flow chart. For example, steps in processes executed by devices may be executed in a different order from the order described in a flow chart or may be executed in parallel.

Further, a computer program can be created that causes hardware such as a CPU, ROM, or RAM, incorporated in each of the devices, to function in a manner similar to that of structures in the above-described devices. Furthermore, it is possible to provide a recording medium having the computer program recorded thereon. Moreover, by configuring respective functional blocks shown in a functional block diagram as hardware, the hardware can achieve a series of processes.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above embodiment, while an example has been shown where an image process is executed for image data in which the figure of a player who plays tennis has been captured, by having the sensor apparatus 100 mounted in the tennis racket 10, the present disclosure is not limited to such an example. The present disclosure improves the efficiency of an image process by changing the content of the image process, by focusing on a moving body, and a movement pattern of a tool handling the moving body. It is possible for the technology according to the present disclosure to be applied to a moving body, and a movement pattern of a tool handling the moving body, if there exists some pattern.

For example, it is also possible for the technology according to the present disclosure to be applied, in the case where capturing a player who plays soccer as a photographic subject, to an image process for image data obtained by capturing the figure of the player who kicks a ball, upon mounting the sensor apparatus 10 on a spike, stocking, shin guard (shin guard) or the like of this player, as a tool.

Further, for example, it is also possible for the technology according to the present disclosure to be applied, in the case where capturing a player who plays golf as a photographic subject, to an image process for image data obtained by capturing the figure of the player who hits a ball with a golf club, upon mounting the sensor apparatus 10 on a golf club, wrist band or the like of this player, as a tool.

Further, for example, it is also possible for the technology according to the present disclosure to be applied, in the case where capturing a player who plays baseball as a photographic subject, to an image process for image data obtained by capturing the figure of the player who hits a ball with a bat, upon mounting the sensor apparatus 10 on a bat, wrist band or the like of this player, as a tool.

In addition, the effects described in the present specification are merely illustrative and demonstrative, and not limitative. In other words, the technology according to the present disclosure can exhibit other effects that are evident to those skilled in the art along with or instead of the effects based on the present specification.

### Reference Signs List

- 10: tennis racket
- 100: sensor apparatus
- 110: sensor data acquisition unit
- 120: sensor data transmission unit
- 200: information processing apparatus
- 210: sensor data reception unit
- 220: image data reception unit
- 230: sensor data analysis unit
- 240: image data analysis unit
- 250: data display unit
- 300: camera
- 310: image data acquisition unit
- 320: image data transmission unit

## Claims

1. An image processing apparatus (200), comprising:
an acquisition unit (210, 220) configured to acquire image data in which a condition is captured where a sensor apparatus that outputs sensing data by sensing a state of a tool used at the time when handling a moving body is used; and
an image processing unit (240) configured to cause a target range of a detection process of the moving body included in the image data acquired by the acquisition unit to change in accordance with an analysis result of sensing data output by the sensor apparatus,
**characterised in that**
the image processing unit predicts a movement velocity of the moving body from an analysis result of sensing data to be output by the sensor apparatus, and sets the target range in which the moving body is predicted to move in accordance with the predicted movement velocity.

2. The information processing apparatus according to claim 1,
wherein the image processing unit executes the detection process in a section where sensing data to be output by the sensor apparatus satisfies a prescribed condition of being within a predetermined interval from an impact with the tool detected by the sensor apparatus.

3. The image processing apparatus according to claim 1,
wherein the image processing unit executes the detection process in prescribed sections before and after a point in time when sensing data to be output by the sensor apparatus satisfies a prescribed condition.

4. The image processing apparatus according to claim 1,
wherein the image processing unit detects a point in time of an output of sensing data according to the sensor apparatus being given an impact from the moving body, from an analysis result of sensing data output by the sensor apparatus.

5. The image processing apparatus according to claim 1,
wherein the image processing unit causes a target range within an image for performing the detection process, at the time when performing the detection process, to change at a point in time when sensing data to be output by the sensor apparatus satisfies a prescribed condition, and before and after the point in time.

6. The image processing apparatus according to claim 5,
wherein the image processing unit narrows the target range at the time of the detection process to a prescribed range surrounding a position of a photographic subject handling the tool.

7. The image processing apparatus according to claim 6,
wherein the image processing unit narrows the target range at the time of the detection process to a prescribed range in front of the photographic subject.

8. The image processing apparatus according to claim 1,
wherein the image processing unit causes a prediction direction that the moving body is predicted to move to change at a point in time when sensing data to be output by the sensor apparatus satisfies a prescribed condition, and after the point in time.

9. The image processing apparatus according to claim 8,
wherein the image processing unit causes a size of a prediction range in which the moving body is predicted to move to change at the point in time and after the point in time.

10. The image processing apparatus according to claim 1,
wherein the image processing unit predicts a moving track of the moving body from an analysis result of sensing data to be output by the sensor apparatus, and sets a prediction range in which the moving body is predicted to move in accordance with the predicted track.

11. The image processing apparatus according to claim 1,
wherein the image processing unit sets a prediction range in which the moving body is predicted to move in accordance with the predicted movement velocity.

12. The image processing apparatus according to claim 1,
wherein the tool is a hitting tool for changing a movement direction of the moving body by striking the moving body,
wherein the acquisition unit acquires image data in which a condition is captured where the moving body is struck by the hitting tool on which the sensor apparatus has been mounted, and
wherein the image processing unit detects the moving body with a movement direction changed by the hitting tool from the image data.

13. The image processing apparatus according to claim 12, wherein the tool is a tool used at the time when playing a sport, and
wherein the moving body is a ball used at the time when playing a sport.

14. An image processing method, comprising:
acquiring image data in which a condition is captured where a sensor apparatus that outputs sensing data by sensing a state of a tool used at the time when handling a moving body is used; and
causing a target range of a detection process of the moving body included in the acquired image data to change in accordance with an analysis result of sensing data output by the sensor apparatus,
**characterized in that**
the change is caused by predicting a movement velocity of the moving body from an analysis result of sensing data to be output by the sensor apparatus, and setting the target range in which the moving body is predicted to move in accordance with the predicted movement velocity.

## Patentansprüche

1. Bildverarbeitungsvorrichtung (200), umfassend:
eine Erfassungseinheit (210, 220), konfiguriert zum Erfassen von Bilddaten, in denen eine Kondition aufgezeichnet wird, in der eine Sensorvorrichtung verwendet wird, die Abtastungsdaten ausgibt, durch Abtasten eines Zustands eines Werkzeugs, das zu der Zeit der Handhabung eines sich bewegenden Körpers verwendet wird; und
eine Bildverarbeitungseinheit (240), konfiguriert zum Bewirken, dass ein Zielbereich eines Detektionsprozesses des sich bewegenden Körpers, enthalten in den durch die Erfassungseinheit erfassten Bilddaten, sich gemäß einem Analyseergebnis von Abtastungsdaten, ausgegeben durch die Sensorvorrichtung, ändert,
**dadurch gekennzeichnet, dass**
die Bildverarbeitungseinheit eine Bewegungsgeschwindigkeit des sich bewegenden Körpers aus einem Analyseergebnis von Abtastungsdaten, die durch die Sensorvorrichtung auszugeben sind, vorhersagt und den Zielbereich, in den der sich bewegende Körper sich zu bewegen vorhergesagt wird, gemäß der vorhersagten Bewegungsgeschwindigkeit einstellt.

2. Informationsverarbeitungsvorrichtung nach Anspruch 1,
wobei die Bildverarbeitungseinheit den Detektionsprozess in einem Abschnitt ausführt, in dem durch die Sensorvorrichtung auszugebende Abtastungsdaten eine vorgegebene Kondition, innerhalb eines im Voraus bestimmten Intervalls von einer Einwirkung mit dem durch die Sensorvorrichtung detektierten Werkzeug zu sein, erfüllen.

3. Bildverarbeitungsvorrichtung nach Anspruch 1,
wobei die Bildverarbeitungseinheit den Detektionsprozess in vorgegebenen Abschnitten vor und nach einem Zeitpunkt, zu dem durch die Sensorvorrichtung auszugebende Abtastungsdaten eine vorgegebene Kondition erfüllen, ausführt.

4. Bildverarbeitungsvorrichtung nach Anspruch 1,
wobei die Bildverarbeitungseinheit einen Zeitpunkt einer Ausgabe von Abtastungsdaten, zu dem die Sensorvorrichtung eine Einwirkung von dem sich bewegenden Körper erhält, aus einem Analyseergebnis von durch die Sensorvorrichtung ausgegebenen Abtastungsdaten detektiert.

5. Bildverarbeitungsvorrichtung nach Anspruch 1,
wobei die Bildverarbeitungseinheit bewirkt, dass sich ein Zielbereich innerhalb eines Bildes zum Durchführen des Detektionsprozesses zu der Zeit der Durchführung des Detektionsprozesses zu einem Zeitpunkt, zu dem durch die Sensorvorrichtung auszugebende Abtastungsdaten eine vorgegebene Kondition erfüllen, und vor und nach dem Zeitpunkt ändert.

6. Bildverarbeitungsvorrichtung nach Anspruch 5,
wobei die Bildverarbeitungseinheit den Zielbereich zu der Zeit des Detektionsprozesses auf einen vorgegebenen Bereich, der eine Position eines fotografischen Subjekts umgibt, das das Werkzeug handhabt, einengt.

7. Bildverarbeitungsvorrichtung nach Anspruch 6,
wobei die Bildverarbeitungseinheit den Zielbereich zu der Zeit des Detektionsprozesses auf einen vorgegebenen Bereich vor dem fotografischen Subjekt einengt.

8. Bildverarbeitungsvorrichtung nach Anspruch 6,
wobei die Bildverarbeitungseinheit bewirkt, dass sich eine Vorhersagerichtung, in die der sich bewegende Körper sich zu bewegen vorhergesagt wird, zu einem Zeitpunkt, zu dem durch die Sensorvorrichtung auszugebende Abtastungsdaten eine vorgegebene Kondition erfüllen, und nach dem Zeitpunkt ändert.

9. Bildverarbeitungsvorrichtung nach Anspruch 8,
wobei die Bildverarbeitungseinheit bewirkt, dass sich eine Größe eines Vorhersagebereichs, in die der sich bewegende Körper sich zu bewegen vorhergesagt wird, zu einem Zeitpunkt und nach dem Zeitpunkt ändert.

10. Bildverarbeitungsvorrichtung nach Anspruch 1,
wobei die Bildverarbeitungseinheit eine Bewegungsbahn des sich bewegenden Körpers aus einem Analyseergebnis von durch die Sensorvorrichtung auszugebenden Abtastungsdaten vorhersagt und einen Vorhersagebereich einstellt, in dem der sich bewegende Körper sich zu bewegen gemäß der vorhergesagten Bahn vorhergesagt wird.

11. Bildverarbeitungsvorrichtung nach Anspruch 1,
wobei die Bildverarbeitungseinheit einen Vorhersagebereich einstellt, in dem der sich bewegende Körper sich zu bewegen gemäß der vorhergesagten Bewegungsgeschwindigkeit vorhergesagt wird.

12. Bildverarbeitungsvorrichtung nach Anspruch 1,
wobei das Werkzeug ein schlagendes Werkzeug zum Ändern der Bewegungsrichtung des sich bewegenden Körpers durch Auftreffen auf den sich bewegenden Körper ist,
wobei die Erfassungseinheit Bilddaten erfasst, in denen eine Kondition aufgezeichnet wird, in der der sich bewegende Körper durch das schlagende Werkzeug, an das die Sensorvorrichtung montiert wurde, getroffen wird, und
wobei die Bildverarbeitungseinheit den sich bewegenden Körper mit einer durch das schlagende Werkzeug geänderten Bewegungsrichtung aus den Bilddaten detektiert.

13. Bildverarbeitungsvorrichtung nach Anspruch 12,
wobei das Werkzeug ein Werkzeug ist, das zu der Zeit des Betreibens eines Sports verwendet wird, und
wobei der sich bewegende Körper ein Ball ist, der zu der Zeit des Betreibens eines Sports verwendet wird.

14. Bildverarbeitungsverfahren, umfassend:
Erfassen von Bilddaten, in denen eine Kondition aufgezeichnet wird, in der eine Sensorvorrichtung verwendet wird, die Abtastungsdaten ausgibt, durch Abtasten eines Zustands eines Werkzeugs, das zu der Zeit der Handhabung eines sich bewegenden Körpers verwendet wird; und
Bewirken, dass ein Zielbereich eines Detektionsprozesses des sich bewegenden Körpers, enthalten in den erfassten Bilddaten, sich gemäß einem Analyseergebnis von Abtastungsdaten, ausgegeben durch die Sensorvorrichtung, ändert,
**dadurch gekennzeichnet, dass**
die Änderung bewirkt wird durch Vorhersagen einer Bewegungsgeschwindigkeit des sich bewegenden Körpers aus einem Analyseergebnis von Abtastungsdaten, die durch die Sensorvorrichtung auszugeben sind, und Einstellen des Zielbereichs, in den der sich bewegende Körper sich zu bewegen vorhergesagt wird, gemäß der vorhersagten Bewegungsgeschwindigkeit.

## Revendications

1. Appareil (200) de traitement d'images, comprenant :
une unité d'acquisition (210, 220) configurée pour acquérir des données d'image dans lesquelles est capturée une condition lors de l'utilisation d'un appareil capteur qui fournit en sortie des données captées en captant un état d'un instrument utilisé lors de la manipulation d'un objet en mouvement ; et
une unité de traitement d'images (240) configurée pour modifier une plage cible d'un processus de détection du corps en mouvement contenu dans les données d'image acquises par l'unité d'acquisition en fonction d'un résultat d'analyse de données captées fournies en sortie par l'appareil capteur,
**caractérisé en ce que**
l'unité de traitement d'images prédit une vitesse de mouvement du corps en mouvement à partir d'un résultat d'analyse de données captées destinées à être fournies en sortie par l'appareil capteur, et définit la plage cible du mouvement prédit du corps en mouvement en fonction de la vitesse de mouvement prédite.

2. Appareil de traitement d'informations selon la revendication 1,
dans lequel l'unité de traitement d'images exécute le processus de détection dans une section où des données captées destinées à être fournies en sortie par l'appareil capteur remplissent une condition prescrite selon laquelle elles se situent à un intervalle prédéterminé près d'un impact avec l'instrument détecté par l'appareil capteur.

3. Appareil de traitement d'images selon la revendication 1,
dans lequel l'unité de traitement d'images exécute le processus de détection dans des sections prescrites avant et après un instant auquel des données captées destinées à être fournies en sortie par l'appareil capteur remplissent une condition prescrite.

4. Appareil de traitement d'images selon la revendication 1,
dans lequel l'unité de traitement d'images détecte un instant d'une sortie de données captées selon un impact porté à l'appareil capteur par le corps en mouvement, à partir d'un résultat d'analyse de données captées fournies en sortie par l'appareil détecteur.

5. Appareil de traitement d'images selon la revendication 1,
dans lequel l'unité de traitement d'images modifie une plage cible au sein d'une image pour la mise en oeuvre du processus de détection, au moment de la mise en oeuvre du processus de détection, à un instant où des données captées destinées à être fournies par l'appareil capteur remplissent une condition prescrite, et avant et après l'instant.

6. Appareil de traitement d'images selon la revendication 5,
dans lequel l'unité de traitement d'images rétrécit la plage cible au moment du processus de détection jusqu'à une plage prescrite entourant une position d'un sujet photographique manipulant l'instrument.

7. Appareil de traitement d'images selon la revendication 6,
dans lequel l'unité de traitement d'images rétrécit la plage cible au moment du processus de détection jusqu'à une plage prescrite au devant du sujet photographique.

8. Appareil de traitement d'images selon la revendication 1,
dans lequel l'unité de traitement d'images modifie une direction de prédiction du mouvement prédit du corps en mouvement à un instant où des données captées destinées à être fournies en sortie par l'appareil capteur remplissent une condition prescrite, et après l'instant.

9. Appareil de traitement d'images selon la revendication 8,
dans lequel l'unité de traitement d'images fait varier une taille d'une plage de prédiction du mouvement prédit du corps en mouvement à l'instant et après l'instant.

10. Appareil de traitement d'images selon la revendication 1,
dans lequel l'unité de traitement d'images prédit une trajectoire de mouvement du corps en mouvement à partir d'un résultat d'analyse de données captées destinées à être fournies en sortie par l'appareil capteur, et définit une plage de prédiction du mouvement prédit du corps en mouvement en fonction de la trajectoire prédite.

11. Appareil de traitement d'images selon la revendication 1,
dans lequel l'unité de traitement d'images définit une plage de prédiction du mouvement prédit du corps en mouvement en fonction de la vitesse de mouvement prédite.

12. Appareil de traitement d'images selon la revendication 1,
dans lequel l'instrument est un instrument de frappe destiné à modifier une direction de mouvement du corps en mouvement en percutant le corps en mouvement,
dans lequel l'unité d'acquisition acquiert des données d'image dans lesquelles est capturée une condition lorsque le corps en mouvement est percuté par l'instrument de frappe sur lequel l'appareil capteur a été monté, et
dans lequel l'unité de détection d'images détecte le corps en mouvement dont la direction de mouvement a été modifiée par l'instrument de frappe à partir des données d'image.

13. Appareil de traitement d'images selon la revendication 12,
dans lequel l'instrument est un instrument utilisé lors de la pratique d'un sport, et
dans lequel le corps en mouvement est une balle utilisée lors de la pratique d'un sport.

14. Procédé de traitement d'images, comprenant :
l'acquisition de données d'image dans lesquelles est capturée une condition lors de l'utilisation d'un appareil capteur qui fournit en sortie des données captées en captant un état d'un instrument utilisé lors de la manipulation d'un objet en mouvement ; et
la modification d'une plage cible d'un processus de détection du corps en mouvement contenu dans les données d'image acquises en fonction d'un résultat d'analyse de données captées fournies en sortie par l'appareil capteur,
**caractérisé en ce que**
la modification comprend la prédiction d'une vitesse de mouvement du corps en mouvement à partir d'un résultat d'analyse de données captées destinées à être fournies en sortie par l'appareil capteur, et la définition de la plage cible du mouvement prédit du corps en mouvement en fonction de la vitesse de mouvement prédite.
